# FASCICULE DE BREVET EUROPEEN

(11) **EP 0 520 373 B1**
(45) Date de publication et mention de la délivrance du brevet: **27.12.1995**
(21) Numéro de dépôt: 92110564.9
(22) Date de dépôt: 23.06.1992
(51) Int. Cl.: F16D 65/84, F16D 65/04

(54) **Dispositif de plaquette de frein à disque, en particulier à garniture en carbone-carbone**
Anordnung eines Kohlenstoff/Kohlenstoff-Scheibenbremsbelages
Arrangement of a carbon/carbon disc brake pad

(30) Priorité: 28.06.1991 FR 9108079
(43) Date de publication de la demande: 30.12.1992
(73) Titulaire: CARBONE INDUSTRIE, Société Anonyme, 93176 Bagnolet Cédex (FR)
(72) Inventeur: Prud'Homme, Guy, F-69110 Sainte-Foy-les-lyon (FR)
(74) Mandataire: Weinmiller, Jürgen

(56) Documents cités:
- DE-B- 1 555 683
- DE-U- 6 601 785
- GB-A- 2 127 918
- US-A- 2 806 570
- US-A- 4 836 339
- US-A- 4 995 482

## Description

La présente invention concerne un dispositif de plaquette à garniture en matériau de friction structural à échauffement élevé en particulier en carbone-carbone pour frein à disque destiné à être monté sur un étrier quelconque comprenant au moins une surface de positionnement de la plaquette sur laquelle débouche au moins un piston de poussée de la plaquette et un agencement de liaison de la plaquette sur l'étrier.

Le remplacement, notamment sur véhicules à roues, des freins classiques à disque en fonte et plaquettes à garniture organique par leur équivalent en carbone-carbone pose une difficulté majeure au niveau de l'étrier. En effet, deux problèmes se posent :
- le premier concerne la fixation de la plaquette dans l'étrier ; les moyens d'obtention des plaquettes à garniture organique étant très différents de ceux des plaquettes carbone-carbone, il est impossible de fabriquer une plaquette carbone-carbone de la même constitution que son équivalent organique ; de façon générale, les garnitures organiques sont surmoulées sur une tôle métallique (dite backplate) comportant les moyens de fixation de la plaquette ; une plaquette identique structurale, en particulier en carbone-carbone, sans backplate, nécessiterait un usinage particulier.
- le second problème concerne l'isolation thermique de l'étrier ; en effet, pour une même utilisation, une plaquette carbone-carbone a une température d'échauffement beaucoup plus élevée que son homologue organique ; des isolations sont donc nécessaires pour protéger l'étrier des températures excessives pouvant en particulier entraîner des phénomènes de "vapor-lock" au niveau du fluide de commande de l'étrier.

C'est pour ces raisons, qu'est actuellement remplacé l'étrier utilisé par un étrier spécialement conçu pour les disques et plaquettes à garniture en carbone-carbone, en particulier sur les véhicules de compétition.

Pour réaliser l'isolation, un tel étrier connu comporte des anneaux d'isolation en titane ou en amiante emmanchés au bout des pistons (voire des pistons entièrement réalisés en titane) et des pattes de support également en titane rapportées sur l'étrier pour le maintien latéral de la garniture.

Le remplacement de l'étrier original par un modèle adapté de ce type entraîne un coût élevé pour l'installation de ces freins plus efficaces que les freins classiques.

Un dispositif de plaquette pour frein à disque comprenant :
- un premier élément dit élément-écran destiné à être disposé contre la surface de positionnement,
- au moins un deuxième élément dit élément-entretoise et disposé contre le premier élément,
- une garniture,
   le premier élément et/ou le deuxième élément comportant des moyens de maintien de la garniture et des moyens de fixation coopérant avec l'agencement de liaison de l'étrier,
   est connu du brevet US-4 995 482. Ce dispositif est destiné à la fixation d'une plaquette classique organique à backplate. C'est cette backplate qui est disposée contre l'élément-entretoise. Un tel dispositif ne peut résoudre les problèmes thermiques posés par le montage d'une garniture en matériau de friction structural à échauffement élevé en particulier en carbone-carbone.

Le brevet GB-2 127 918 concerne également un dispositif de plaquette à garniture organique classique à backplate.

Pour résoudre ce problème de montage de garniture en matériau de friction structural à échauffement élevé, selon la présente invention, le dispositif de plaquette comprend :
- un élément-écran en tôle de matériau d'isolation thermique,
- au moins un élément-entretoise en matériau d'isolation thermique d'épaisseur suffisante, à contacts frontaux réduits,
- une garniture en matériau de friction structural à échauffement élevé en particulier en carbone-carbone positionnée contre le deuxième élément.

Ce dispositif présente de nombreux avantages.

La garniture peut être de forme particulièrement simple.

Comme il sera vu plus loin, les éléments associés à cette garniture sont de fabrication aisée. Ils peuvent être réalisés par emboutissage et pliage.

De ce fait l'on obtient un prix de revient minimisé, aucune modification de l'étrier n'étant nécessaire et l'éventuel usinage de la garniture étant particulièrement simplifié.

Par ailleurs, les éléments associés à la garniture étant indispensables pour le montage de celle-ci, l'on évite un montage sauvage, sans prendre les précautions d'isolation nécessaires, de plaquettes en carbone-carbone.

Le dispositif conforme à l'invention permet donc simultanément la fixation de la garniture et l'isolation thermique nécessaire pour les garnitures du type carbonecarbone, à température d'échauffement élevée.

Grâce à cet agencement de deux éléments interposés, les surfaces de contact sont relativement nombreuses, améliorant ainsi l'isolation par résistance thermique de contact. De plus, elles sont en surface minimisées afin de réduire les échanges thermiques.

Selon un mode de réalisation préféré, l'élément écran est une tôle à bords latéraux rabattus à angle droit.

De cette façon, l'élément écran assure l'isolation entre l'étrier et les appuis latéraux de la garniture par résistance de contact, en plus de sa fonction d'écran aux radiations thermiques au niveau de la surface de positionnement. Il est possible d'utiliser plusieurs épaisseurs de tôle entre l'étrier et les appuis de la garniture, afin de multiplier les résistances de contact.

De préférence, l'élément entretoise est constitué de barrettes conformées pour que leur majeure partie s'intercale entre l'élément écran et la garniture au droit du ou des pistons.

Ainsi sont réalisés des contacts de surface réduite entre la garniture et l'élément entretoise d'une part et l'élément écran et l'élément entretoise d'autre part. De plus, ces barrettes sont conformées pour assurer une bonne stabilité des pistons compte tenu de l'effort dû à la pression du fluide de commande. De plus l'élément entretoise est d'une épaisseur suffisante pour assurer le refroidissement par convection de la face arrière de la garniture.

Le dispositif peut également présenter au moins l'une des caractéristiques suivantes :
- l'élément écran et l'élément entretoise sont solidaires,
- les moyens de fixation sur l'étrier sont portés par l'élément entretoise,
- les moyens de fixation sur l'étrier sont portés par l'élément écran,
- les moyens de maintien de la garniture sont constitués de languettes recourbées solidaires de l'élément écran,
- les moyens de maintien de la garniture sont constitués de nervures solidaires de l'élément entretoise.

L'invention est exposée ci-après plus en détail à l'aide de dessins représentant quelques modes de réalisation.

La figure 1 est une vue en perspective d'un premier mode de réalisation du dispositif conforme à l'invention.

Les figures 2 et 3 sont des vues de devant et de dessus du dispositif positionné dans un étrier de frein à disque.

La figure 4 est une vue en perspective d'un deuxième mode de réalisation du dispositif pouvant être monté dans un étrier identique.

Les figures 5 à 10 sont des vues de devant et de dessus de variantes du dispositif conforme à l'invention correspondant à divers types d'étriers.

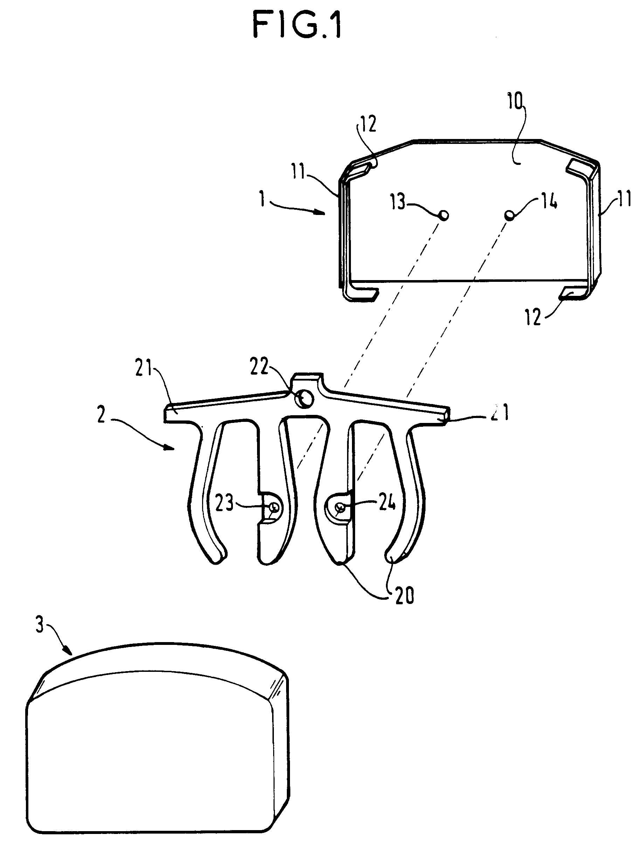

Selon un premier mode de réalisation préféré de l'invention, le dispositif comporte un élément écran 1, un élément entretoise 2 et une garniture 3 tels que représentés sur la figure 1.

L'élément écran 1 est constitué d'une tôle 10 de forme et de dimension telles qu'elle recouvre la surface de positionnement de la plaquette.

Cette tôle 10 comporte des bords latéraux 11 rabattus à angle droit. Des languettes 12 sont solidaires de la tôle 10. Elles peuvent par exemple être rapportées par soudage ou réalisées par pliage.

L'élément entretoise 2 est constitué de barrettes 20 conformées pour que leur majeure partie s'intercale entre l'élément écran 1 et la garniture 3 au droit des deux pistons de l'étrier. Il comporte également les moyens de fixation (21, 22) coopérant avec l'agencement de liaison de l'étrier. Selon ce mode de réalisation, l'étrier est pourvu d'épaulements sur lesquels viennent reposer les pattes 21 et d'une goupille introduite dans l'orifice 22.

L'élément écran 1 et l'élément entretoise 2 sont solidarisés l'un à l'autre par rivetage dans les orifices 13, 14, 23, 24. Des méplats sont prévus à proximité des orifices 23, 24 de l'élément entretoise 2 pour que les rivets ne fassent pas saillie hors de la surface de l'élément entretoise 2 et éviter tout jeu au niveau de la garniture 3. A l'arrière de la tôle 10, les rivets peuvent faire saillie, se trouvant dans l'espace creux des pistons.

La garniture 3, de forme particulièrement simple, vient se loger entre les languettes 12 de l'élément écran 1 et est maintenue par celles-ci.

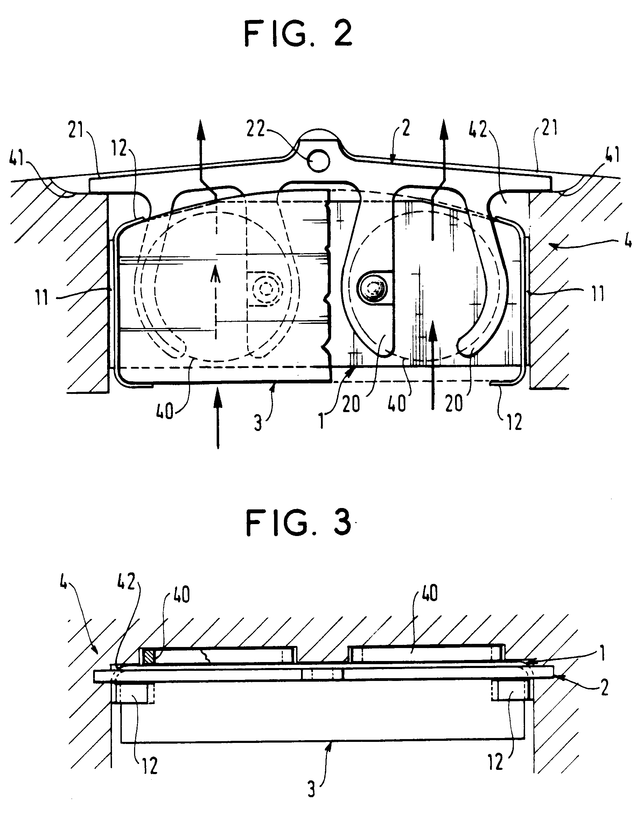

Les figures 2 et 3 représentent le dispositif décrit ci-dessus positionné dans un étrier 4. De la surface de positionnement 42, débouchent deux pistons 40 à tête creuse. Sur cette surface est positionné l'ensemble de fixation et d'isolation de la garniture constitué des éléments écran 1 et entretoise 2 solidarisés par rivets. Il est maintenu par appui des pattes 21 de l'élément entretoise 2 sur les épaulements 41 de l'étrier 4 et par introduction d'une goupille dans l'orifice 22 de l'élément entretoise 2 et des orifices correspondants de l'étrier. La garniture 3 est placée contre cet ensemble, retenu par les languettes 12 de l'élément écran 1.

L'élément écran 1 comme l'élément entretoise 2 sont en matériau d'isolation thermique. Ils peuvent être en inox réfractaire, en titane, en céramique ou en métal revêtu de céramique, par exemple.

Ces deux éléments peuvent également être réalisés d'une seule pièce usinée.

L'élément écran 1 assure la fonction d'écran aux radiations thermiques et ses bords rabattus 11 isolent les côtés du logement dans l'étrier 4.

Grâce à l'élément entretoise 2, des contacts supplémentaires sont obtenus, augmentant l'isolation. Ces contacts sont cependant minimisés en surface grâce à leur forme découpée. Il peut d'ailleurs être usiné en méplats d'épaisseur inférieure afin que les surfaces de contact ne soient présentes qu'au droit des pistons 4.

Des zones d'affaiblissement, du type traits de scie, peuvent également être réalisées sur l'élément entretoise 2 afin de lui donner une certaine capacité de déformation en plan pour éviter tout jeu de l'ensemble causé par d'éventuels défauts de planéité.

Enfin, entre les bras 20 grâce à leur épaisseur suffisante, peut circuler de l'air, favorisant le refroidissement. Il est à noter que selon ce premier mode de réalisation, de l'air de refroidissement peut circuler du bas vers le haut ou inversement entre l'élément écran 1 et la garniture 3 assurant ainsi le refroidissement de ladite garniture par convection.

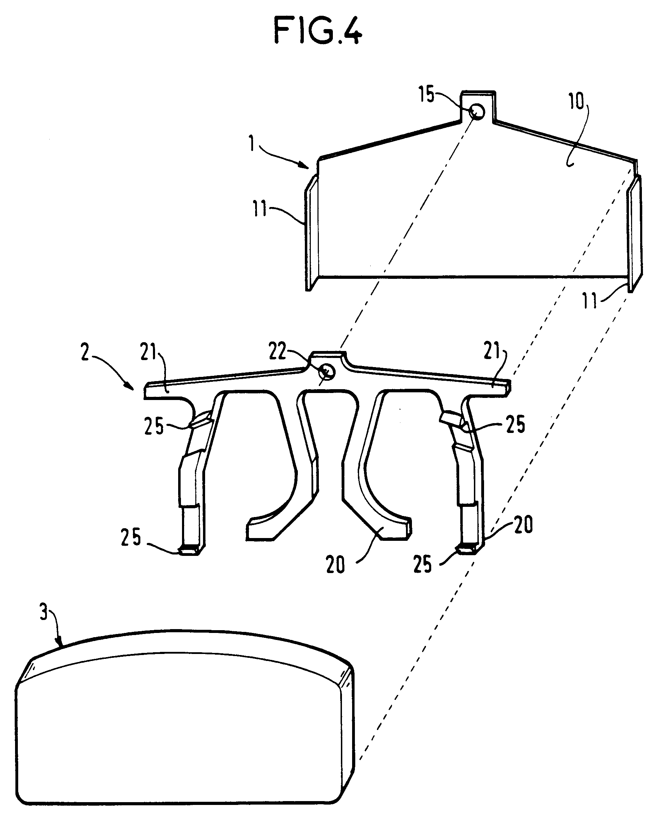

La figure 4 représente un autre mode de réalisation du dispositif destiné au même type d'étrier.

L'élément écran 1 est constitué d'une tôle 10 à bords rabattus 11. Il comporte également un orifice 15 constituant un moyen de fixation coopérant avec l'agencement de liaison de l'étrier.

L'élément entretoise 2 est de forme générale analogue à celui représenté sur la figure 1, avec des barrettes 20. Il comporte également des pattes 21 et un orifice 22 constituant des moyens de fixation coopérant avec l'agencement de liaison de l'étrier.

Les moyens de maintien de la garniture 3 sont ici portés par l'élément entretoise 2. Ils sont constitués de nervures 25 obtenues par soudage ou usinage par exemple.

L'ensemble est maintenu sur l'étrier par appui des pattes 21 sur les épaulements de l'étrier et par introduction de la goupille dans les orifices 15 et 22, l'élément écran 1 et l'élément entretoise 2 n'étant pas solidarisés directement l'un à l'autre, selon ce mode de réalisation.

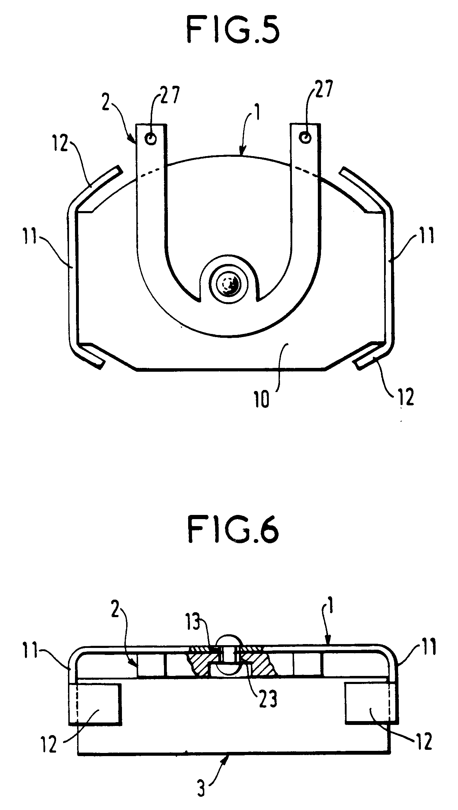

Les figures 5 et 6 représentent un dispositif conforme à l'invention destiné à équiper un étrier à un seul piston par plaquette et à agencement de liaison constitué d'une épingle introduite dans les orifices 27 de l'élément entretoise 2. La garniture 3 n'est pas représentée sur la figure 5.

L'élément entretoise 2 y est constitué d'une barrette en forme de U, rivetée à la tôle 10 au travers des orifices 13, 23 pratiqués dans la tôle 10 et l'élément entretoise 2.

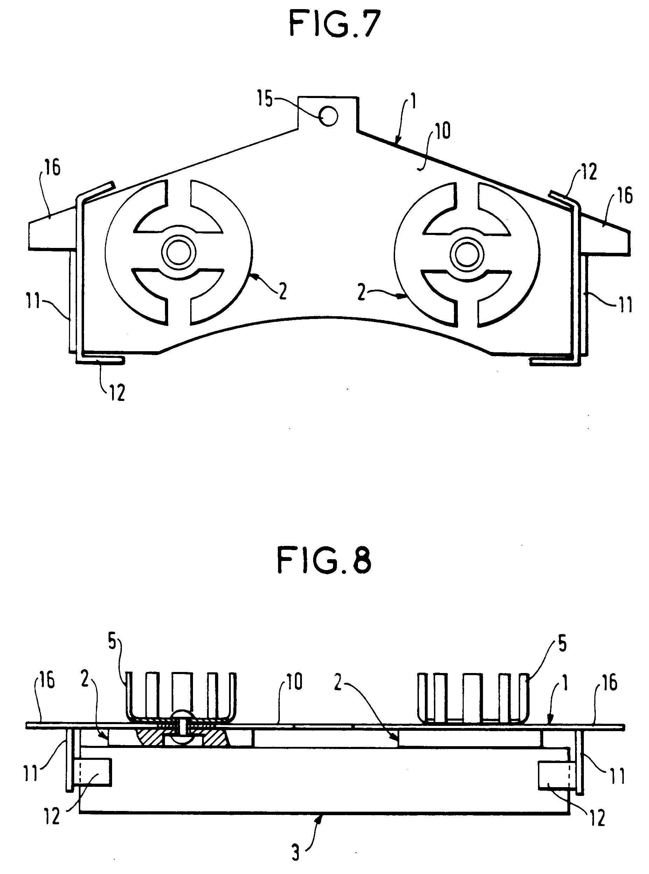

Les figures 7 et 8 représentent un dispositif conforme à l'invention destiné à un étrier à deux pistons par plaquette et à organes de fixation supplémentaire 5 par encliquetage dans les têtes creuses des pistons.

La fixation à l'étrier se fait, également selon ce dispositif, par appui de pattes 16 pratiquées dans l'élément écran 1 et grâce à une goupille introduite dans l'orifice 15 de cet élément 1.

Les éléments entretoises 2 sont au nombre de deux et comportent des barrettes de forme semi-circulaire. Ils sont disposés au droit des pistons et sont rivetés sur la tôle 10, les rivets réalisant également la liaison des organes de fixation 5.

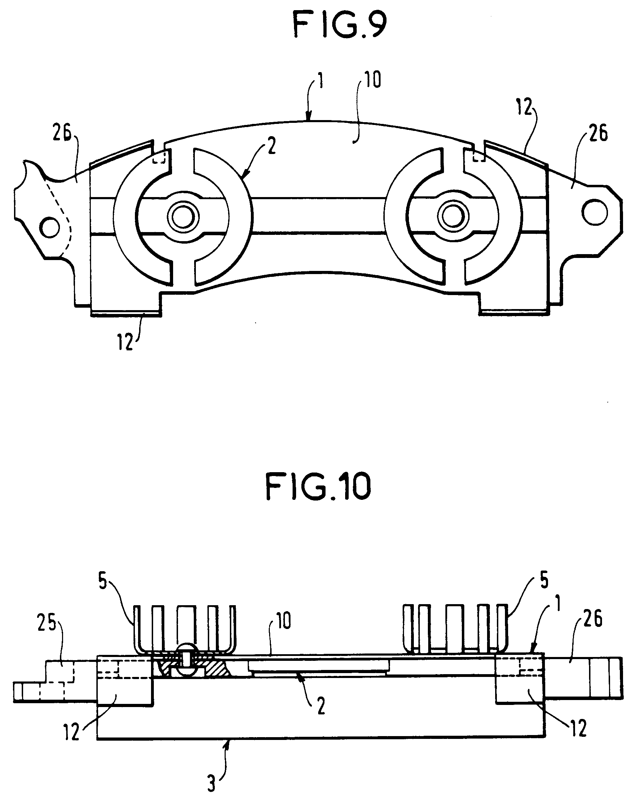

Les figures 9 et 10 représentent un dispositif conforme à l'invention destiné à un étrier à deux pistons par plaquette et à organe de fixation supplémentaires 5 par encliquetage dans les têtes creuses des pistons. De tels étriers équipent les automobiles de tourisme de série, par exemple.

La fixation à l'étrier se fait également, selon ce dispositif, par goupillage latéral et pour ce faire l'élément entretoise 2 est pourvu de deux pattes latérales 26 pourvue chacune d'un orifice. Cet élément entretoise 2 est constitué d'une barrette horizontale et de barrettes semi-circulaires au droit des pistons. La barrette centrale est usinée en méplats pour ménager un espace entre elle et la garniture 3.

## Revendications

1. Dispositif de plaquette pour frein à disque destiné à être monté sur un étrier quelconque comportant au moins une surface de positionnement de la plaquette sur laquelle débouche au moins un piston de poussée de la plaquette et un agencement de liaison de la plaquette sur l'étrier, dispositif comprenant :
- un premier élément (1) dit élément-écran destiné à être disposé contre la surface de positionnement,
- au moins un deuxième élément (2) dit élément-entretoise et disposé contre le premier élément (1),
- une garniture (3),
le premier élément (1) et/ou le deuxième élément (2) comportant des moyens de maintien de la garniture (3) et des moyens de fixation coopérant avec l'agencement de liaison de l'étrier,
dispositif caractérisé en ce que l'élément-écran (1) est en tôle de matériau d'isolation thermique, en ce que le ou les élément(s)-entretoise(s) (2) sont en matériau d'isolation thermique d'épaisseur suffisante et sont à contacts frontaux réduits et en ce que la garniture (3) est en matériau de friction structural à échauffement élevé en particulier en carbone-carbone et est positionnée contre le ou les élément(s)-entretoise(s) (2).

2. Dispositif selon la revendication 1, caractérisé en ce que l'élément écran (1) est une tôle (10) à bords latéraux (11) rabattus à angle droit.

3. Dispositif selon la revendication 1 ou 2, caractérisé en ce que l'élément entretoise (2) est constitué de barrettes (20) conformées pour que leur majeure partie s'intercale entre l'élément écran (1) et la garniture (3) au droit du ou des pistons.

4. Dispositif selon l'une quelconque des revendications précédentes, caractérisé en ce que l'élément écran (1) et le ou les élément(s) entretoise(s) (2) sont solidaires.

5. Dispositif selon l'une quelconque des revendications précédentes, caractérisé en ce que les moyens de fixation (5, 21, 22, 26, 27) sur l'étrier sont portés par l'élément entretoise (2).

6. Dispositif selon l'une quelconque des revendications précédentes, caractérisé en ce que les moyens de fixation (5, 15, 16) sur l'étrier sont portés par l'élément écran (1).

7. Dispositif selon l'une quelconque des revendications précédentes, caractérisé en ce que les moyens de maintien de la garniture (3) sont constitués de languettes (12) recourbées solidaires de l'élément écran (1).

8. Dispositif selon l'une quelconque des revendications 1 à 6, caractérisé en ce que les moyens de maintien de la garniture sont constitués de nervures (25) solidaires de l'élément entretoise (2).

## Claims

1. A disk-brake pad device for mounting on a caliper having attachment means for attaching the pad to the caliper, and at least one pad-positioning surface, in which there emerges at least one padactuating piston the device comprising:
a first element (1) called a screen element, for location against the positioning surface,
at least one second element (2) called a spacer element and located against the first element (1), and
a lining (3),
the first element (1) and/or the second element (2) including retaining means for retaining the lining (3) and fixing means cooperating with the attachment means of the caliper,
the device being characterized in that the screen element (1) is of heat-insulating material, in that the spacer element(s) (2) are of heat-insulating material of adequate thickness, and with reduced frontal contacts, and in that the lining (3) is of structural high-temperature friction material, especially a carbon-carbon lining, and is located against the spacer element(s) (2).

2. A device according to claim 1, characterized in that the screen element (1) is a metal plate (10) with lateral edges (11) bent up at right angles.

3. A device according to claim 1 or 2, characterized in that the spacer element (2) is formed by tongues (20) so shaped that their major parts are sandwiched between the screen element (1) and the lining (3) opposite the piston or pistons.

4. A device according to any preceding claim, characterized in that the screen element (1) and the spacer element(s) (2) are fixedly attached to each other.

5. A device according to any preceding claim, characterized in that the fixing means (5, 21, 22, 26, 27) for fixing on the caliper are carried by the spacer element (2).

6. A device according to any preceding claim, characterized in that the fixing means (5, 15, 16) for fixing on the caliper are carried by the screen element (1).

7. A device according to any preceding claim, characterized in that the means for retaining the lining (3) are formed by bent tongues (12) fixedly attached to the screen element (1).

8. A device according to any one of claims 1 to 6, characterized in that the means for retaining the lining (3) are formed by ribs (25) fixedly attached to the spacer element (2).

## Patentansprüche

1. Bremsklotzvorrichtung für eine Scheibenbremse, die auf eine beliebigen Bremsbacke montiert werden soll, welche mindestens eine Positionierfläche für den Bremsklotz, in die mindestens ein Schubkolben für den Bremsklotz mündet, und eine Verbindungsanordnung für den Bremsklotz auf der Bremsbacke aufweist,
- mit einem ersten Element (1), Abschirmelement genannt, das an der Positionierfläche anliegt,
- mit mindestens einem zweiten Element (2), Zwischenelement genannt, das am ersten Element (1) anliegt,
- mit einem Bremsbelag (3),
wobei das erste Element (1) und/oder das zweite Element (2) Mittel für den Halt des Bremsbelags (3) und mit der Verbindungsanordnung der Bremsbacke zusammenwirkende Befestigungsmittel aufweist,
dadurch gekennzeichnet, daß das Abschirmelement (1) aus einem Blech besteht, das aus einem wärmeisolierenden Material ist, daß das Zwischenelement oder die Zwischenelemente (2) aus Wärmeisolationsmaterial ausreichender Dicke mit verringerten stirnseitigen Kontakten bestehen und daß der Bremsbelag (3) aus strukturellem Reibungsmaterial mit erhöhter Erwärmung, insbesondere auf Kohlenstoff-Kohlenstoff-Basis ist, der am Zwischenelement oder den Zwischenelementen (2) anliegt.

2. Vorrichtung nach Anspruch 1, dadurch gekennzeichnet, daß das Abschirmelement (1) ein Blech (10) mit in rechtem Winkel umgeschlagenen Seitenrändern ist.

3. Vorrichtung nach Anspruch 1 oder 2, dadurch gekennzeichnet, daß das Zwischenelement (2) aus Stäben (20) besteht, die so ausgebildet sind, daß der größte Teil von ihnen sich zwischen das Abschirmelement (1) und den Bremsbelag (3) vor dem oder den Kolben einfügt.

4. Vorrichtung nach einem beliebigen der vorhergehenden Ansprüche, dadurch gekennzeichnet, daß das Abschirmelement (1) und das Zwischenelement (2) fest miteinander verbunden sind.

5. Vorrichtung nach einem beliebigen der vorhergehenden Ansprüche, dadurch gekennzeichnet, daß die Mittel (5, 21, 22, 26, 27) zur Befestigung an der Bremsbacke vom Zwischenelement (2) getragen werden.

6. Vorrichtung nach einem beliebigen der vorhergehenden Ansprüche, dadurch gekennzeichnet, daß die Mittel (5, 15, 16) zur Befestigung an der Bremsbacke vom Abschirmelement (1) getragen werden.

7. Vorrichtung nach einem beliebigen der vorhergehenden Ansprüche, dadurch gekennzeichnet, daß die Haltemittel für den Bremsbelag (3) aus gekrümmten Zungen (12) bestehen, die fest mit dem Abschirmelement (1) verbunden sind.

8. Vorrichtung nach einem beliebigen der Ansprüche 1 bis 6, dadurch gekennzeichnet, daß die Haltemittel für den Bremsbelag aus fest mit dem Zwischenelement (2) verbundenen Rippen (25) bestehen.
